# EUROPÄISCHE PATENTANMELDUNG

(11) **EP 1 588 940 A2**
(43) Veröffentlichungstag der Anmeldung: **26.10.2005**
(21) Anmeldenummer: 05008592.7
(22) Anmeldetag: 20.04.2005
(51) Int. Cl.: B64D 11/00, B64D 11/02, B64D 11/04, B64D 13/08, B60H 1/00, B60H 1/32, F25B 17/12

(54) **Verfahren und Vorrichtung zur Temperierung von gasförmigen und/oder flüssigen Medien in Verkehrsmitteln, insbesondere in Luftfahrzeugen sowie Verwendung der Vorrichtung**

(30) Priorität: 23.04.2004 DE 102004019790
(71) Anmelder: Airbus Deutschland GmbH, 21129 Hamburg (DE)
(72) Erfinder: Höhne, Joachim, Dr.-Ing., 21029 Hamburg (DE); Höhne, Merle, Dr.-Ing., 21029 Hamburg (DE); Heinrich, Hans-Jürgen, Dipl.-Phys., 22609 Hamburg (DE)
(74) Vertreter: Schiemann, Siegfried

(57) **Zusammenfassung**

Die Erfindung betrifft ein Verfahren zur Temperierung von gasförmigen und/oder flüssigen Medien (23) in Verkehrsmitteln, insbesondere in Luftfahrzeugen, bei gleichzeitiger Vergleichmäßigung der Lastkurve der elektrischen Bordversorgung des Verkehrsmittels mit einem Mediumspeicher (4) und/oder einer Zuführung (24), einer Steuer- und Regeleinrichtung (12), einer Abnahmestelle (5) sowie mindestens einem thermochemischen Speicher zur Speicherung von thermischer Energie.

Erfindungsgemäß wird einem aus dem Mediumspeicher (4) und/oder der Zuführung (24) entnehmbaren gasförmigen und/oder flüssigen Medium (23) thermische Energie aus dem oder den thermochemischen Speichern (2,3) zugeführt oder entzogen, wobei die Zufuhr oder die Entziehung der thermischen Energie mittels der Steuer- und Regeleinrichtung (12) zur Einstellung einer Temperatur des Mediums (23) an der Abnahmestelle (5) gesteuert wird, wodurch eine definierte und weitgehend verzögerungsarme Temperierung auch größerer Volumenströme des Mediums im Bereich einer Abnahmestelle ohne übermäßige Belastung der elektrischen Bordversorgung des Verkehrsmittels erreichbar ist.

Darüber hinaus betrifft die Erfindung eine Vorrichtung zur Durchführung des Verfahrens sowie die Verwendung der Vorrichtung zur Temperierung eines gasförmigen und/oder flüssigen Mediums (23) in Küchen-, Sanitär-, oder Aufenthaltsbereichen von Verkehrsmitteln, insbesondere in Luftfahrzeugen.

## Beschreibung

Die Erfindung betrifft ein Verfahren zur Temperierung von gasförmigen und/oder flüssigen Medien in Verkehrsmitteln, insbesondere in Luftfahrzeugen, bei gleichzeitiger Vergleichmäßigung der Lastkurve der elektrischen Bordversorgung des Verkehrsmittels mit einem Mediumspeicher und/oder einer Zuführung, einer Steuer-und Regeleinrichtung, einer Abnahmestelle sowie mindestens einem thermochemischen Speicher zur Speicherung von thermischer Energie.

Weiterhin betrifft die Erfindung eine Vorrichtung zur Temperierung von gasförmigen und/oder flüssigen Medien in Verkehrsmitteln, insbesondere in Luftfahrzeugen, bei gleichzeitiger Vergleichmäßigung der Lastkurve der elektrischen Bordversorgung des Verkehrsmittels mit einem Mediumspeicher und/oder einer Zuführung, einer Steuer- und Regeleinrichtung, einer Abnahmestelle sowie mindestens einem thermochemischen Speicher zur Speicherung von thermischer Energie.

Darüber hinaus betrifft die Erfindung die Verwendung der Vorrichtung zur Temperierung eines gasförmigen und/oder flüssigen Mediums, insbesondere in Küchen-, Sanitär-, oder Aufenthaltsräumen von Verkehrsmitteln, insbesondere in Luftfahrzeugen.

In Verkehrsmitteln, insbesondere an Bord von Luftfahrzeugen wie beispielsweise Flugzeugen, werden zunehmend Vorrichtungen zur Erwärmung bzw. Erhitzung von Medien, insbesondere von Wasser und/oder Luft, für vielfältige Verwendungen eingesetzt. Weiterhin werden auch Vorrichtungen zur Kühlung von Medien verwendet. Bei derartigen, häufig elektrisch betriebenen Vorrichtungen kann es sich beispielsweise um Boiler, Durchlauferhitzer, Kühlgeräte etc. handeln, in denen beispielsweise Wasser temperiert wird. Das erwärmte bzw. erhitzte Wasser oder der erzeugte Dampf kann dann beispielsweise in Bordküchen für die Zubereitung von Heißgetränken, Speisen und/oder zu Reinigungs- oder Spülzwecken verwendet werden. In Sanitärbereichen kann das Warm- bzw. Heißwasser beispielsweise für Wasserzapfstellen, Bidets, Badewannen, Duschen oder dergleichen genutzt werden. Gekühlte Luft oder gekühltes Wasser kann unter anderem zur Raumklimatisierung eingesetzt werden.

Der Betrieb dieser vorbekannten elektrischen Geräte zur Beheizung oder Kühlung von größeren Wassermengen ist in der Regel mit einem hohen Bedarf an elektrischer Energie verbunden. Dies gilt insbesondere wenn ausreichend Warm- bzw. Heißwasser zum Duschen oder Baden bereitgestellt werden soll. Schnelle Temperaturwechsel auf Benutzeranforderung verstärken den zur Temperierung erforderlichen Energiebedarf noch zusätzlich.

Dies führt vor allem in den Zeiten, in denen eine große Nachfrage an Warm- und Heißwasser besteht - beispielsweise zu den Mahlzeiten oder am frühen Morgen nach der Schlafphase - zu sehr hohen Lastspitzen in der elektrischen Bordversorgung des Verkehrsmittels. Um auch die höchstmögliche, theoretisch denkbare Lastspitze in der elektrischen Bordversorgung abdecken zu können, muss diese entsprechend groß dimensioniert werden. Dies führt dazu, dass die elektrische Bordversorgung einschließlich der Leitungen, der elektrischen Generatoren oder der anderen Stromquellen, leistungsstärker ausgelegt werden muss, als es der durchschnittliche Energiebedarf an Bord des Verkehrsmittels über den ganzen Tag hinweg eigentlich erfordern würde. Die leistungsstärkere Auslegung der elektrischen Bordversorgung bedingt in der Regel aber auch eine signifikante Erhöhung des Gewichts, was insbesondere bei Luftfahrzeugen von Nachteil ist, weil sich hierdurch zum Beispiel die Reichweite verringert.

Damit sind die vorbekannten, ausschließlich elektrisch betriebenen Vorrichtungen zur schnellen Temperierung, dass heißt zur Erwärmung, Erhitzung oder Kühlung größerer Volumenströme von Wasser und/oder anderen Medien, insbesondere für Luftfahrzeuge nur bedingt geeignet.

Aufgabe der Erfindung ist die schnelle Temperierung von gasförmigen und/oder flüssigen Medien bei einer gleichzeitigen Vergleichmäßigung der Lastkurve der elektrischen Bordversorgung des Verkehrsmittels.

Diese Aufgabe wird durch ein erfindungsgemäßes Verfahren mit den Merkmalen des Patentanspruchs 1, durch eine erfindungsgemäße Vorrichtung mit den Merkmalen des Patentanspruchs 17 sowie durch die Verwendung der erfindungsgemäßen Vorrichtung nach Maßgabe des Patentanspruchs 34 gelöst.

Dadurch, dass nach Maßgabe des erfindungsgemäßen Verfahrens einem aus dem Mediumspeicher und/oder der Zuführung entnehmbaren gasförmigen und/oder flüssigen Medium thermische Energie aus dem oder den thermochemischen Speichern zugeführt oder entzogen wird, wobei die Zufuhr oder die Entziehung der thermischen Energie mittels der Steuer- und Regeleinrichtung zur Einstellung einer Temperatur des Mediums an der Abnahmestelle variiert wird, ist eine definierte und weitgehend verzögerungsarme Temperierung auch größerer Volumenströme des Mediums im Bereich einer Abnahmestelle ohne übermäßige Belastung der elektrischen Bordversorgung des Verkehrsmittels erreichbar.

Dadurch, dass nach Maßgabe der erfindungsgemäßen Vorrichtung einem aus dem Mediumspeicher und/oder der Zuführung entnehmbaren gasförmigen und/oder flüssigen Medium thermische Energie aus dem oder den thermochemischen Speichern zuführbar oder entziehbar ist, wobei die Zufuhr oder die Entziehung der thermischen Energie mittels der Steuer- und Regeleinrichtung zur Einstellung einer Temperatur des Mediums an der Abnahmestelle variierbar ist, ist eine definierte und weitgehend verzögerungsarme Temperierung auch größerer Volumenströme des verzögerungsarme Temperierung auch größerer Volumenströme des Mediums im Bereich einer Abnahmestelle ohne übermäßige Belastung der elektrischen Bordversorgung des Verkehrsmittels erreichbar.

In vorteilhafter Weise werden das erfindungsgemäße Verfahren sowie die erfindungsgemäße Vorrichtung zur Temperierung von gas- und/oder flüssigen Medien im Bereich einer Abnahmestelle verwendet.

So kann beispielsweise aus einem Wasserspeicher oder einer Wasserzuleitung entnommenes Wasser schnell in einem ersten thermochemischen Speicher erwärmt werden, wobei das Wasser entweder direkt zu einer Abnahmestelle geleitet wird und/oder vor Ableitung zur Abnahmestelle zunächst mit dem Wasser im Wasserspeicher gemischt wird. Die Erwärmung im ersten thermochemischen Speicher erfolgt hierbei durch die Einlagerung von Wasserstoff, der von einem zweiten thermochemischen Speicher, dem Wärme auf einem vorzugsweise niedrigen Temperaturniveau über einen längeren Zeitraum zugeführt wurde, abgegeben wird.

Soll nun umgekehrt beispielsweise das Wasser abgekühlt werden, so wird das Wasser durch den zweiten thermochemischen Speicher geleitet, darin abgekühlt und anschließend zur Abnahmestelle geführt.

Durch eine einfache und schnell mögliche Umschaltung, beispielsweise mittels bekannter elektrisch betätigbarer Ventile, lässt sich der Durchfluss des Wassers zwischen dem ersten und dem zweiten thermochemischen Speicher umschalten, sodass nahezu verzögerungslose Temperaturänderungen des Wassers im Bereich der Abnahmestelle realisierbar sind. Ein zusätzlicher Vorteil der Vorrichtung liegt darin, dass diese Temperaturänderungen im Zuge der Temperierung ohne exzessive Zufuhr von elektrischer Energie möglich sind.

Damit sind das erfindungsgemäße Verfahren sowie die Vorrichtung zur schnellen Temperierung von flüssigen und/oder gasförmigen Medien im Bereich der Abnahmestelle, insbesondere zur Temperierung von Wasser in Sanitärbereichen, Küchen oder Aufenthaltsräumen prädestiniert.

Gleichzeitig lässt sich durch die Absorption von Wasserstoff in einem zweiten thermochemischen Speicher Wärme auf einem niedrigen Temperaturniveau akkumulieren, die in Spitzenlastzeiten der elektrischen Bordversorgung in einem ersten thermochemischen Speicher kurzzeitig auf einem hohen Temperaturniveau wieder abgebbar ist und die beispielsweise für die Erwärmung von Wasser nutzbar ist. Parallel hierzu ist auch eine Abkühlung des Wassers im Bereich des zweiten thermochemischen Speichers im Bedarfsfall möglich. Gleichzeitig ergibt sich durch den Betrieb der erfindungsgemäßen Vorrichtung eine Vergleichmäßigung bzw. Glättung der elektrischen Lastkurve der elektrischen Bordversorgung.

Weitere vorteilhafte Ausgestaltungen des erfindungsgemäßen Verfahrens sind in den Patentansprüchen 2 bis 16 dargestellt. Weiterbildungen und vorteilhafte Ausgestaltungen der erfindungsgemäßen Vorrichtung sowie deren Verwendung sind in den Ansprüchen 18 bis 35 niedergelegt.

Weitere Einzelheiten und Vorteile ergeben sich aus der nachfolgenden Beschreibung eines Ausführungsbeispiels der erfindungsgemäßen Vorrichtung.

In der Zeichnung zeigt:

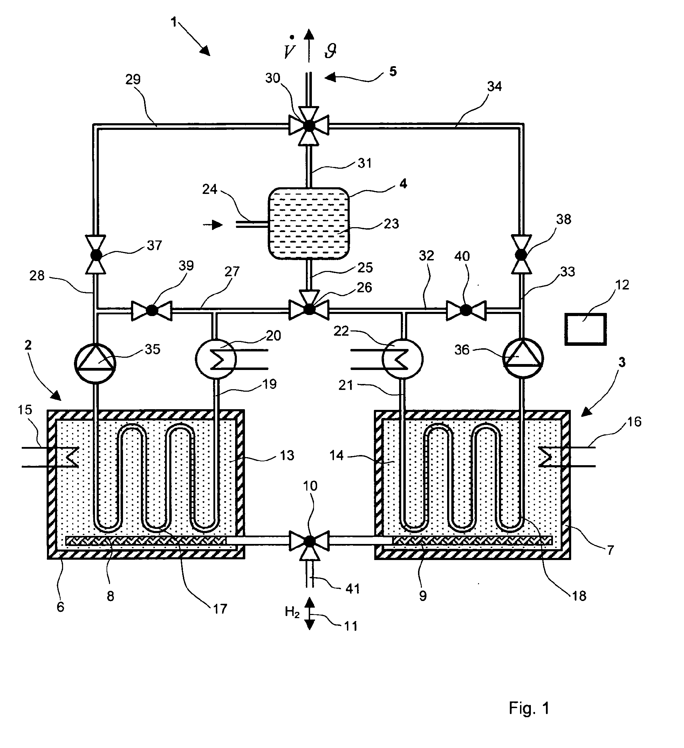

- Fig. 1: Eine schematische Darstellung der Vorrichtung zur Durchführung des erfindungsgemäßen Verfahrens.

Die Fig. 1 zeigt ein Ausführungsbeispiel einer erfindungsgemäßen Vorrichtung 1 zur Temperierung von gasförmigen und/oder flüssigen Medien in Verkehrsmitteln, insbesondere in Luftfahrzeugen.

Die Vorrichtung 1 besteht unter anderem aus einem ersten thermochemischen Speicher 2, einem zweiten thermochemischen Speicher 3, einem Mediumspeicher 4 sowie einer Abnahmestelle 5.

Der erste thermochemische Speicher 2 umfasst unter anderem einen ersten Behälter 6 und der zweite thermochemische Speicher 3 beinhaltet einen zweiten Behälter 7. Der erste und der zweite Behälter 6,7 können mit einer zusätzlichen thermischen Isolierung versehen sein, um Wärmeverluste zu minimieren. Weiterhin sind die Behälter 6,7 druckfest und gasdicht ausgebildet.

Innerhalb des ersten Behälters 6 ist eine erste Wasserstoffverteilung 8 und im zweiten Behälter 7 ist entsprechend eine zweite Wasserstoffverteilung 9 angeordnet. Die erste und die zweite Wasserstoffverteilung 8,9 sind über ein Wasserstoffregelventil 10 miteinander verbunden. Das Wasserstoffregelventil 10 ist zusätzlich mit einer in der Darstellung der Fig. 1 nur durch einen Pfeil 11 angedeuteten Wasserstoffquelle oder -senke verbunden. Weiterhin ist das Wasserstoffregelventil 10 mit einer Steuer- und Regeleinrichtung 12 verbunden. Hierbei kann es sich beispielsweise um einen Wasserstoffspeicher oder eine Brennstoffzelle zur Erzeugung elektrischer Energie handeln.

Mittels der Steuer- und Regeleinrichtung 12 lässt sich unter anderem das Wasserstoffregelventil 10 vorzugsweise elektrisch betätigen, sodass Wasserstoff vom zweiten thermochemischen Speicher 3 in den ersten thermochemischen Speicher 2 und umgekehrt strömen kann, wenn das Wasserstoffregelventil 10 von der Steuer- und Regeleinrichtung 12 zumindest teilweise geöffnet wird und ein Druckdifferenz zwischen den thermochemischen Speichern 2,3 herrscht. Weiterhin kann im Bedarfsfall mittels des Wasserstoffregelventils 10 auch Wasserstoff aus der externen Wasserstoffquelle den thermochemischen Speichern 2,3 zur Ergänzung von etwaigen Verlusten zugeführt oder an diese abgeführt werden.

Der erste Behälter 6 ist mindestens teilweise mit einem ersten Metall und/oder einer ersten Metalllegierung 13 zur Bildung eines entsprechenden Metallhydrids und/oder eines Metalllegierungshydrids durch Wasserstoffeinlagerung durch Absorption befüllt. Entsprechend hierzu ist der zweite Behälter 7 mit einem zweiten Metall und/oder einer zweiten Metalllegierung 14 zur Bildung korrespondierender Metallhydride bzw. Metalllegierungshydride durch die Einlagerung von Wasserstoff befüllt.

In der gezeigten Ausführungsvariante der Vorrichtung 1 weist das erste Metall und/oder die erste Metalllegierung 13 im Vergleich zum zweiten Metall und/oder der zweiten Metalllegierung 14 eine höhere Wasserstoffdesorptionstemperatur bei einem Druck von 1 bar auf. In einer besonders bevorzugten Ausführungsvariante bildet das erste Metall und/oder die erste Metalllegierung 13 bei der Einlagerung von Wasserstoff ein Hochtemperaturmetallhydrid und das zweite Metall und oder die zweite Metalllegierung 14 bildet bei der Einlagerung von Wasserstoff ein Niedertemperaturmetallhydrid. Die Metalle und/oder Metalllegierungen 13,14 liegen im gezeigten Ausführungsbeispiel als Schüttung mit einer bestimmten Korngröße vor. Hierzu geeignete hydridbildende Metalle und/oder Metalllegierungen sind im Stand der Technik umfänglich vorbeschrieben.

In einer Bereitschaftsphase der Vorrichtung 1 befindet sich fast der gesamte Wasserstoff des Systems innerhalb des zweiten thermochemischen Speichers 3. Die dem zweiten thermochemischen Speicher 3 auf einem vorzugsweise niedrigen Temperaturniveau zugeführte thermische Energie liegt daher fast vollständig in chemisch gebundener Form als Hydrid vor. Das heißt, dass fast die gesamte zugeführte thermische Energie im zweiten thermochemischen Speicher 3 in chemischer Form durch Hydridbildung im Bereich des zweiten Metalls und/oder der zweiten Metalllegierung 14 dauerhaft gespeichert ist. Eine thermische Isolierung der Behälter 6,7 kann daher nur zu den Zeiten, in denen der erste und/oder der zweite thermochemische Speicher 2,3 thermische Energie aufnimmt oder abgibt, etwaige Wärmeverluste verringern.

Weiterhin sind im ersten und im zweiten thermochemischen Speicher 2,3 eine erste und eine zweite Speichertemperiereinrichtung 15,16 angeordnet. Die erste und die zweite Speichertemperiereinrichtung 15,16 sind im Bereich des ersten Metalls und/oder der ersten Metalllegierung 13 sowie im Bereich des zweiten Metalls und/oder der zweiten Metalllegierung 14 positioniert.

Die Speichertemperiereinrichtungen 15,16 können den thermochemischen Speichern 2,3 sowohl thermische Energie zuführen als auch abführen, dass heißt heizend oder kühlend wirken. Die Speichertemperiereinrichtungen 15,16 können als elektrische Heiz- und/oder Kühlelemente, beispielsweise als Peltierelemente oder dergleichen, ausgebildet sein.

Weiterhin sind innerhalb des ersten und des zweiten Behälters 6,7 ein erster Wärmeübertrager 17 sowie ein zweiter Wärmeübertrager 18 angeordnet. Im gezeigten Ausführungsbeispiel sind die Wärmeübertrager 17,18 als Rohrschlangen ausgeführt, die im Bereich des ersten Metalls und/oder der ersten Metalllegierung 13 bzw. im Bereich des zweiten Metalls und/oder der zweiten Metalllegierung 14 positioniert sind. Abweichend von der Beschaffenheit der Metalle und/oder der Metalllegierungen 13,14 können andere Konstruktionsformen für die Ausgestaltung der Wärmeübertrager 17,18 gewählt werden.

Im Bereich einer ersten Zuleitung 19 zum ersten thermochemischen Speicher 2 befindet sich eine erste Zuleitungstemperiereinrichtung 20. Korrespondierend hierzu ist im Bereich einer zweiten Zuleitung 21 zum zweiten thermochemischen Speicher 3 eine zweite Zuleitungstemperiereinrichtung 22 angeordnet. Die erste und die zweite Zuleitungstemperiereinrichtung 20,22 können als elektrische Heiz- und/oder Kühlelemente, beispielsweise als Peltierelemente oder dergleichen ausgeführt sein. Die Speichertemperiereinrichtungen 15,16 sowie die Zuleitungstemperiereinrichtungen 20, 22 können aber auch als Wärmeübertrager ausgebildet sein, um beispielsweise thermische Energie aus externen thermischen Prozessen zuführen oder abführen zu können.

Im Mediumspeicher 4 können ein beliebiges gasförmiges und/oder flüssiges Medium, beispielsweise Wasser, Luft, Wasserdampf oder andere technische Gase bevorratet sein.

In weiteren Fortgang der Beschreibung des Ausführungsbeispiels wird davon ausgegangen, dass es sich bei dem Medium 23 um Wasser handelt.

Der Mediumspeicher 4 zur Speicherung des Wassers ist mit einer externen Zuführung 24 versehen, um im Bedarfsfall etwaige Wasserverluste bzw. an der Abnahmestelle 5 entnommenes Wasser wieder auffüllen zu können. Ausgehend vom Mediumspeicher 4 gelangt das Wasser zunächst über die Leitung 25 zum Regelventil 26. Das Regelventil 26 ist wiederum vorzugsweise elektrisch mittels der Steuer- und Regeleinrichtung 12 betätigbar. Das Regelventil 26 ist über eine Leitung 27 mit der ersten Zuleitung 19 zum ersten Wärmeüberträger 17 verbunden. Vom ersten Wärmeübertrager 17 gelangt das Wasser über eine erste Rückleitung 28 sowie eine weitere Leitung 29 zurück zu einem Abnahmeregelventil 30. Vom Abnahmeregelventil 30 aus wird das Wasser entweder zu der in der Zeichnung nicht näher dargestellten Abnahmestelle 5 oder über eine weitere Leitung 31 wieder zurück in den Mediumspeicher 4 geleitet. Die Zurückleitung des Wassers in den Mediumspeicher 4 kann beispielsweise dazu benutzt werden, die Temperatur des Wassers durch Mischung innerhalb des Mediumspeichers 4 zu reduzieren bzw. zu vergleichmäßigen.

Bei der Abnahmestelle 5 kann es sich um eine beliebige Wasserentnahmestelle, beispielsweise um einen Wasserhahn, eine Mischbatterie, eine Dusche, einen Badewannenzulauf oder dergleichen handeln. Weiterhin kann die Abnahmestelle 5 auch ein beliebiges Küchengerät, zum Beispiel eine Kaffee- oder eine Espressomaschine sowie ein Wasserbad zur Speiseerwärmung oder dergleichen sein.

Ausgehend vom Regelventil 26 kann das Wasser alternativ auch über eine Leitung 32 der zweiten Zuleitung 21 und damit dem zweiten Wärmeübertrager 18 zugeführt werden. Vom zweiten Wärmeübertrager 18 aus gelangt das Wasser dann über eine zweite Rückleitung 33 sowie die weitere Leitung 34 zum Abnahmeregelventil 30 und von dort aus entweder wieder zurück in den Mediumspeicher 4 oder direkt zur Abnahmestelle 5.

Im Bereich der ersten und der zweiten Rückleitung 28,33 sind eine erste Pumpe 35 und eine zweite Pumpe 36 angeordnet. Die Pumpen 35,36 sind vorzugsweise elektrisch betrieben und mittels der Steuer- und Regeleinrichtung 12 steuerbar, sodass insbesondere eine stufenlose Durchflussmengenregulierung in Abhängigkeit von der abgeforderten Menge des temperierten Wasser im Bereich der Abnahmestelle 5 möglich ist.

Zwischen den Leitungen 28,29 ist ein Ventil 37 angeordnet. Im Bereich der Leitungen 33,34 befindet sich das Ventil 38. Weiterhin sind im Bereich der Leitungen 27,32 die Ventile 39 und 40 angeordnet. Bei den Ventilen 37,38,39,40 handelt es sich vorzugsweise ebenfalls um elektrisch von der Steuer- und Regeleinrichtung 12 betätigbare Ventile, die alternativ auch nur teilweise, beispielsweise zur Durchflussmengenregulierung, von der Steuer- und Regeleinrichtung 12 geöffnet bzw. geschlossen werden können. Entsprechendes gilt für das Wasserstoffregelventil 10, das Regelventil 26 sowie das Abnahmeregelventil 30.

Wie vorstehend bereits beschrieben, befindet sich in einer Bereitschaftsphase der Vorrichtung 1 nahezu der gesamte Wasserstoff im Bereich des zweiten thermochemischen Speichers 3. Soll jetzt beispielsweise Wasser im Bereich der Abnahmestelle 5 in einer Nutzphase zum Duschen, Baden oder zur Verwendung in einer Bordküche in Luftfahrzeugen etc. erwärmt werden, wird zunächst das Wasserstoffregelventil 10 von der Steuer- und Regeleinrichtung 12 zumindest teilweise geöffnet. Daraufhin strömt der Wasserstoff vom zweiten thermochemischen Speicher 3 aufgrund des herrschenden Druckgefälles in den ersten thermochemischen Speicher 2. Gegebenenfalls muss die Desorption bzw. Austreibung des Wasserstoffs aus dem zweiten thermochemischen Speicher 3 durch eine zusätzliche direkte Beheizung mit der zweiten Speichertemperiereinrichtung 16 unterstützt bzw. aufrechterhalten werden. Alternativ ist derselbe Unterstützungs- bzw. Aufrechterhaltungseffekt erzielbar, wenn das Wasser indirekt mittels der zweiten Zuleitungstemperiereinrichtung 22 im Bereich des zweiten thermochemischen Speichers 3 erwärmt wird.

Der im Bereich des zweiten thermochemischen Speichers 3 desorbierte Wasserstoff wird innerhalb des ersten thermochemischen Speichers 2 vom ersten Metall und/oder der ersten Metalllegierung 13 absorbiert. Die hierbei auf einem hohen Temperaturniveau innerhalb des ersten Metalls und/oder der ersten Metalllegierung 13 freiwerdende Wärme bei der Hydridbildung erwärmt bzw. erhitzt das im ersten Wärmeübertrager 17 befindliche Wasser. Über die erste Rückleitung 28 und die damit verbundene Leitung 29 gelangt das erwärmte Wasser dann zum Abnahmeregelventil 30, von wo aus das Wasser entweder direkt zur Abnahmestelle 5 oder zunächst wieder zurück in den Mediumspeicher 4 geleitet wird. Die Ventile 39,40 sind in diesem Zustand der Vorrichtung vorzugsweise vollständig geschlossen, sodass das Wasser zwangsweise die Wärmeübertrager 17,18 durchströmt.

Soll jetzt beispielsweise die Temperatur des Wassers im Bereich des Abnahmeregelventils 30 bzw. der Abnahmestelle 5 wieder reduziert werden, schließt die Steuer- und Regeleinrichtung 12 zunächst das Wasserstoffregelventil 10 zumindest teilweise. Hierdurch reduziert sich die Freigabe von thermischer Energie im ersten Metall und/oder der ersten Metalllegierung 13 unverzüglich, sodass das Wasser im Bereich des ersten Wärmeübertragers 17 abkühlt. Um den Abkühlprozess weiter zu beschleunigen und/oder zu unterstützen, ist es möglich das noch warme Wasser zusätzlich durch eine entsprechende Steuerung des Regelventils 26, des Abnahmeregelventils 30 sowie der Ventile 37,38,39,40 mittels der Steuer- und Regeleinrichtung 12 durch den zweiten Wärmeübertrager 18 fließen zu lassen. Infolge der im Bereich des zweiten thermochemischen Speichers 3 noch anhaltenden Desorption von Wasserstoff wird in diesem Bereich noch thermische Energie zur Aufrechterhaltung des Desorptionsprozesses benötigt, die dem über die zweite Zuleitung 21 zugeführten Wasser wieder entzogen wird, sodass eine zusätzliche Abkühlung des Wassers im Bereich des zweiten Wärmeübertragers 18 eintritt.

Um die Abkühlung des Wassers noch weiter zu beschleunigen, ist es weiterhin möglich das Ventil 39 zu öffnen (Bypass), sodass das Wasser im Wesentlichen überhaupt nicht mehr über den ersten Wärmeübertrager 17 geleitet wird und demzufolge keine thermische Energie mehr aus dem ersten thermochemischen Speicher 2 an das Wasser übertragen wird.

Damit die Steuer- und Regeleinrichtung 12, das Wasserstoffregelventil 10, das Regelventil 26, das Abnahmeregelventil 30, die Pumpen 35, 36, die Speichertemperiereinrichtungen 15,16, die Zuleitungstemperiereinrichtungen 20,22 sowie die einfachen Ventile 37,38,39,40 zur Einstellung einer bestimmten, definierten Temperatur des Wassers im Bereich der Abnahmestelle 5 steuern kann, sind in geeigneten Bereichen des Leitungssystems zusätzliche, in der Zeichnung nicht näher dargestellte Temperaturmess-, Durchflussmengen- und/oder Drucksensoren angeordnet. Weiterhin ist die Steuer- und Regeleinrichtung 12 mit einem Eingang versehen, über den ein Benutzer die Temperatur und/oder die Durchflussmenge des Wassers oder eines anderen Mediums 23 im Bereich der Abgabestelle 5 mittels einer in der Zeichnung nicht näher dargestellten Temperaturwähleinrichtung weitgehend verzögerungsfrei regulieren kann. Die Steuer- und Regeleinrichtung 12 kann hierzu beispielsweise eine Rechnereinheit mit entsprechenden Steuer- und Regelungsmodulen aufweisen.

Ferner sind in der Darstellung der Fig. 1 die Steuerleitungen zur Verbindung der Steuer- und Regeleinrichtung 12 mit dem Wasserstoffregelventil 10, dem Regelventil 26, dem Abnahmeregelventil 30, den Pumpen 35, 36, den Speichertemperiereinrichtungen 15,16, den Zuleitungstemperiereinrichtungen 20,22 sowie den weiteren Ventilen 37,38,39,40 aufgrund der notwendigen zeichnerischen Übersicht nicht näher dargestellt. Die Steuerleitungen sind hierbei in der Lage Steuer- und Regelsignale von und zur Steuer- und Regeleinrichtung 12 auf elektrischem, optischem, pneumatischem oder hydraulischem Weg zu übertragen. Auch im Bereich der Zuführung 24 kann ein in der Darstellung der Fig. 1 nicht näher dargestelltes, von der Steuer- und Regeleinrichtung 12 kontrollierbares Ventil, vorgesehen sein.

Mittels der erfindungsgemäßen Vorrichtung 1 ist es möglich, die Temperatur des Wassers im Bereich der Abnahmestelle 5 sehr schnell und in einem weiten Temperaturintervall allein durch die entsprechende Betätigung der Ventile 10,26,30, der Temperiereinrichtungen 15,16,20,22 sowie der Pumpen 35,36 mittels der Steuer-und Regeleinrichtung 12 nach entsprechenden Temperatur- und/oder Mengenvorgaben eines Benutzers im Bereich der Abnahmestelle zu variieren. Darüber hinaus ist auch eine sehr exakte Einstellung der Temperatur des im Bereich der Abnahmestelle 5 abgegebenen Wassers möglich. Daher eignet sich die erfindungsgemäße Vorrichtung 1 insbesondere zur Temperierung von Wasser in Sanitärbereichen, Aufenthaltbereichen und/oder Bordküchen in Verkehrsmitteln aller Art, insbesondere jedoch in Luftfahrzeugen, ohne die elektrische Bordversorgung zu stark zu belasten.

In einer Regenerationsphase der Vorrichtung 1, insbesondere in einer Schwachlastperiode der elektrischen Bordversorgung eines Verkehrsmittels, kann der Wasserstoff vom ersten thermochemischen Speicher 2 wieder in den zweiten thermochemischen Speicher 3 zurückgeführt werden. Zu diesem Zweck muss dem ersten thermochemischen Speicher 2 erneut direkt thermische Energie mittels der ersten Speichertemperiereinrichtung 15 und/oder indirekt über das Wasser durch die erste Zuleitungstemperiereinrichtung 20 zugeführt werden. Die hierfür benötigte elektrische Energie kann in einer Schwachlastphase beispielsweise der elektrischen Bordversorgung des betreffenden Verkehrsmittels entnommen werden. Durch die Rückführung des Wasserstoffs in einer Schwachlastperiode des elektrischen Bordnetzes des Verkehrsmittels ergibt sich als Nebeneffekt zugleich eine Vergleichmäßigung bzw. Glättung der Lastkurve. Lastspitzen in der elektrischen Bordversorgung, beispielsweise während des Duschens oder während der Speisenzubereitung werden weitgehend vermieden. Die gesamte elektrische Bordversorgung kann daher schwächer dimensioniert werden, sodass Gewichtseinsparungen möglich sind, die insbesondere bei Luftfahrzeugen von herausgehobener Bedeutung sind.

Ist der im System vorhandene Wasserstoff nahezu vollständig im zweiten thermochemischen Speicher 3 gebunden, befindet sich die Vorrichtung 1 wiederum in der Bereitschaftsphase und die vorstehend beschriebenen Phasen (Bereitschaftsphase, Nutzungsphase und Regenerationsphase) können erneut durchlaufen werden. In der Bereitschaftsphase ist nahezu der gesamte im System vorhandene Wasserstoff in Form eines Hydrids des zweiten Metalls und/oder der zweiten Metalllegierung 14 chemisch gebunden. Die in Form eines Metallhydrids im zweiten thermochemischen Speicher 3 gebundene thermische Energie kann damit über beliebig lange Zeiträume nahezu verlustfrei und zudem bequem auf Abruf gespeichert werden.

Während der Überführung des Wasserstoffs vom ersten thermochemischen Speicher 2 in den zweiten thermochemischen Speicher 3 muss aus dem zweiten thermochemischen Speicher 3 infolge der Wasserstoffabsorption Wärme abgeführt werden, die wiederum zur Beheizung anderer thermischer Prozesse verwendet werden kann. Gleichzeitig muss dem ersten thermochemischen Speicher 2 Wärme auf einem hohen Temperaturniveau zugeführt werden, um die Desorption des Wasserstoffs zu unterstützen bzw. aufrecht zu erhalten.

Mittels der Zuführung 24 ist dem Mediumspeicher 4 im Bedarfsfall frisches Wasser zuführbar, um beispielsweise die im Bereich der Abnahmestelle 5 entnommene Wassermenge oder anderweitige Verluste zu kompensieren.

Der Betrieb der Vorrichtung 1 mit dem Mediumspeicher 4 ist optional. Durch den Einsatz des Mediumspeichers 4 ergibt sich jedoch eine leichtere Regelbarkeit der Temperatur des Wassers im Bereich der Abnahmestelle 5, da Temperaturschwankungen im Bereich der Abnahmestelle 5 bzw. des Abnahmeregelventil 30 durch die im Mediumspeicher 4 enthaltene Wassermenge leichter ausgeglichen werden können.

Über eine an das Wasserstoffregelventil 10 angeschlossene Wasserstoffleitung 41 kann der Vorrichtung 1 im Bedarfsfall zudem entweder Wasserstoff zugeführt oder entnommen werden. Die Zufuhr von Wasserstoff ist beispielsweise dann erforderlich, wenn Leckageverluste innerhalb der thermochemischen Speicher 2,3 auftreten. Umgekehrt ist es auch möglich, Wasserstoff aus der Vorrichtung 1 zu entnehmen, beispielsweise wenn Wasserstoff aus der Vorrichtung 1 infolge von Desorption aus den thermochemischen Speichern 2,3 freigesetzt wird. Dieser freigesetzte Wasserstoff kann dann beispielsweise in einer Brennstoffzelle in elektrische Energie umgewandelt werden, die wiederum zum Betrieb der Speichertemperiereinrichtungen 15,16 sowie der Zulauftemperiereinrichtungen 20,22 oder anderer elektrisch betriebene Einrichtungen genutzt werden kann.

Auch die Pumpen 35,36 sind rein fakultativ. Die Umwälzung des Wassers innerhalb der Vorrichtung kann beispielsweise auch durch das Thermosiphon-Prinzip allein aufgrund der Schwerkraft erfolgen. Weiterhin ist die Vorrichtung 1 nicht auf die Temperierung von Wasser beschränkt. Vielmehr können beliebige gasförmige und/oder flüssige Medien, insbesondere jedoch Wasser, Luft, Wasserdampf, gasförmige Heiz- oder Kältemittel, Wärmeübertragungsmittel und dergleichen temperiert werden.

Der Vorteil der erfindungsgemäßen Vorrichtung 1 gegenüber vorbekannten Ausführungsformen liegt insbesondere in der nahezu verzögerungsfreien Temperierung eines beliebigen Mediums über weite Temperaturintervalle hinweg, wobei zugleich eine Vergleichmäßigung der Lastkurve der elektrischen Bordversorgung erreicht und eine übermäßige Belastung der elektrischen Bordversorgung vermieden wird.

Zudem kommt die Vorrichtung 1 zur Temperierung von Medien mit einem Minimum an bewegten Komponenten aus, sodass die Vorrichtung eine hohe Ausfallsicherheit und eine geringe Wartungsintensität aufweist.

### Bezugszeichenliste

- 1: Vorrichtung
- 2: erster thermochemischer Speicher
- 3: zweiter thermochemischer Speicher
- 4: Mediumspeicher
- 5: Abnahmestelle
- 6: erster Behälter
- 7: zweiter Behälter
- 8: erste Wasserstoffverteilung
- 9: zweite Wasserstoffverteilung
- 10: Wasserstoffregelventil
- 11: Pfeil
- 12: Steuer- und Regeleinrichtung
- 13: erstes Metall und/oder erste Metalllegierung
- 14: zweites Metall und/oder zweite Metalllegierung
- 15: erste Speichertemperiereinrichtung
- 16: zweite Speichertemperiereinrichtung
- 17: erster Wärmeübertrager
- 18: zweiter Wärmeübertrager
- 19: erste Zuleitung
- 20: erste Zuleitungstemperiereinrichtung
- 21: zweite Zuleitung
- 22: zweite Zuleitungstemperiereinrichtung
- 23: Medium
- 24: Zuführung
- 25: Leitung
- 26: Regelventil
- 27: Leitung
- 28: erste Rückleitung
- 29: Leitung
- 30: Abnahmeregelventil
- 31: Leitung
- 32: Leitung
- 33: zweite Rückleitung
- 34: Leitung
- 35: Pumpe
- 36: Pumpe
- 37: Ventil
- 38: Ventil
- 39: Ventil
- 40: Ventil
- 41: Wasserstoffleitung

## Patentansprüche

1. Verfahren zur Temperierung von gasförmigen und/oder flüssigen Medien in Verkehrsmitteln, insbesondere in Luftfahrzeugen, bei gleichzeitiger Vergleichmäßigung der Lastkurve der elektrischen Bordversorgung des Verkehrsmittels mit einem Mediumspeicher (4) und/oder einer Zuführung (24), einer Steuer- und Regeleinrichtung (12), einer Abnahmestelle (5) sowie mindestens einem thermochemischen Speicher zur Speicherung von thermischer Energie, **dadurch gekennzeichnet, dass** einem aus dem Mediumspeicher (4) und/oder der Zuführung (24) entnehmbaren gasförmigen und/oder flüssigen Medium (23) thermische Energie aus dem oder den thermochemischen Speichern zugeführt oder entzogen wird, wobei die Zufuhr oder die Entziehung der thermischen Energie mittels der Steuer- und Regeleinrichtung (12) zur Einstellung einer Temperatur des Mediums (23) an der Abnahmestelle (5) variiert wird.

2. Verfahren nach Anspruch 1, **dadurch gekennzeichnet, dass** der oder die thermochemischen Speicher jeweils mindestens einen Behälter umfassen und in dem oder den Behältern zumindest teilweise ein hydridbildendes Metall und/oder eine hydridbildende Metalllegierung eingebracht wird und im Bereich des hydridbildenden Metalls und/oder der hydridbildenden Metalllegierung jeweils mindestens ein Wärmeübertrager angeordnet wird.

3. Verfahren nach Anspruch 1 oder 2, **dadurch gekennzeichnet, dass** ein erster und ein zweiter thermochemischer Speicher (2,3) vorgesehen wird und in den ersten und den zweiten thermochemischen Speicher (2,3) jeweils verschiedene hydridbildende Metalle und/oder hydridbildende Metalllegierungen eingebracht werden, die unterschiedliche Reaktionstemperaturen bei der Absorption von Wasserstoff entwickeln.

4. Verfahren nach Anspruch 3, **dadurch gekennzeichnet, dass** in einen ersten Behälter (6) des ersten thermochemischen Speichers (2) ein erstes Metall und/oder eine erste Metalllegierung (13) eingebracht wird und in einen zweiten Behälter (7) des zweiten thermochemischen Speichers (3) ein zweites Metall und/oder eine zweite Metalllegierung (14) eingebracht wird, wobei das erste Metall und/oder die erste Metalllegierung (13) sowie das zweite Metall und/oder die zweite Metalllegierung (14) unterschiedliche Desorptionstemperaturen bei einem Druck von 1 bar entwickeln.

5. Verfahren nach Anspruch 4, **dadurch gekennzeichnet, dass** im ersten und im zweiten Behälter (6,7) eine erste und eine zweite Wasserstoffverteilung (8,9) angeordnet wird, die mittels eines von der Steuer- und Regeleinrichtung (12) gesteuerten Wasserstoffregelventils (10) untereinander verbunden werden können.

6. Verfahren nach Anspruch 4 oder 5, **dadurch gekennzeichnet, dass** das Wasserstoffregelventil (10) im Bedarfsfall zur Nachfüllung oder Abführung von Wasserstoff mit einer Wasserstoffquelle verbunden wird.

7. Verfahren nach einem der Ansprüche 4 bis 6, **dadurch gekennzeichnet, dass** das Medium (23) vom Mediumspeicher (4) und/oder von der Zuführung (24) über ein Regelventil (26) wahlweise zu einem ersten und/oder zu einem zweiten Wärmeübertrager (17,18) über eine erste und/oder eine zweite Zuleitung (19,21) geleitet wird.

8. Verfahren nach einem der Ansprüche 4 bis 7, **dadurch gekennzeichnet, dass** das Medium (23) vom ersten und/oder zweiten Wärmeübertrager (17,18) über eine erste und/oder eine zweite Rückleitung (28,33) in den Mediumspeicher (4) zurück und/oder zu einer einem Abnahmeregelventil (30) nachgeschalteten Abnahmestelle (5) geleitet wird.

9. Verfahren nach einem der Ansprüche 4 bis 8, **dadurch gekennzeichnet, dass** in einer Bereitschaftsphase nahezu der gesamte Wasserstoff innerhalb des zweiten thermochemischen Speichers (3) gebunden wird, bei dem die Desorptionstemperatur bei einem Druck von 1 bar im Vergleich zum ersten thermochemischen Speicher (2) geringer ist.

10. Verfahren nach einem der Ansprüche 4 bis 9, **dadurch gekennzeichnet, dass** in einer Nutzphase der im zweiten thermochemischen Speicher (3) in Form eines Hydrids gebundene Wasserstoff durch die zumindest teilweise Öffnung des Wasserstoffregelventils (10) und/oder die Zufuhr von Wärme in den ersten thermochemischen Speicher (2) überführt wird.

11. Verfahren nach einem der Ansprüche 4 bis 10, **dadurch gekennzeichnet, dass** während der Nutzphase dem im Bereich des ersten Wärmeübertragers (17) befindlichen Medium (23) thermische Energie zugeführt und/oder dem im Bereich des zweiten Wärmeübertragers (18) befindlichen Medium (23) thermische Energie entzogen wird, wobei die Zuführung und/oder die Entziehung der thermischen Energie mit Hilfe der Steuer- und Regeleinrichtung (12) sowie einer mit dieser gekoppelten Temperaturwähleinrichtung derart gesteuert werden kann, dass eine definierte Temperatur ϑ des Mediums (23) im Bereich der Abnahmestelle (5) weitgehend verzögerungsfrei erreicht wird.

12. Verfahren nach einem der Ansprüche 4 bis 11, **dadurch gekennzeichnet, dass** eine Regenerationsphase durch die zumindest teilweise Öffnung des Wasserstoffregelventils (10) eingeleitet wird, wobei der Wasserstoff vom ersten thermochemischen Speicher (2) in den zweiten thermochemischen Speicher (3) zurückgeführt wird.

13. Verfahren nach einem der Ansprüche 4 bis 12, **dadurch gekennzeichnet, dass** eine jeweils in den thermochemischen Speicher (2,3) angeordnete erste und zweite Speichertemperiereinrichtung (15,16) von der Steuer- und Regeleinrichtung (12) gesteuert wird, um die Desorptionsrate des Wasserstoffs im betreffenden thermochemischen Speicher (2,3) direkt durch die Temperatur des jeweiligen Metalls und/oder der Metalllegierung (13,14) zu beeinflussen und damit die Rückführung des Wasserstoffs in den zweiten thermochemischen Speicher (3) in der Regenerationsphase zu ermöglichen.

14. Verfahren nach einem der Ansprüche 4 bis 13, **dadurch gekennzeichnet, dass** im Bereich der ersten und/oder der zweiten Zuleitung (19,21) zu den thermochemischen Speichern (2,3) jeweils eine erste und/oder eine zweite Zuleitungstemperiereinrichtung (20,22) angeordnet wird, um die Desorptionsrate des Wasserstoffs im betreffenden thermochemischen Speicher (2,3) indirekt über die Temperatur des Mediums (23) im Bereich der jeweiligen Zuleitung (19,21) zum Wärmeübertrager (17,18) zu beeinflussen und die Rückführung des Wasserstoff in den zweiten thermochemischen Speicher (3) während der Regerationsphase zu ermöglichen.

15. Verfahren nach einem der Ansprüche 4 bis 14, **dadurch gekennzeichnet, dass** als gasförmiges und/oder flüssiges Medium (23) insbesondere Wasser eingesetzt wird.

16. Verfahren nach einem der Ansprüche 4 bis 15, **dadurch gekennzeichnet, dass** aus den thermochemischen Speichern (2,3) Wasserstoff durch Desorption freigesetzt werden kann, der zur Erzeugung von Strom, insbesondere mittels einer Brennstoffzelle, verwendet werden kann.

17. Vorrichtung zur Temperierung von gasförmigen und/oder flüssigen Medien in Verkehrsmitteln, insbesondere in Luftfahrzeugen, bei gleichzeitiger Vergleichmäßigung der Lastkurve der elektrischen Bordversorgung des Verkehrsmittels mit einem Mediumspeicher (4) und/oder einer Zuführung (24), einer Steuer- und Regeleinrichtung (12), einer Abnahmestelle (5) sowie mindestens einem thermochemischen Speicher zur Speicherung von thermischer Energie, **dadurch gekennzeichnet, dass** einem aus dem Mediumspeicher (4) und/oder der Zuführung (24) entnehmbaren gasförmigen und/oder flüssigen Medium (23) thermische Energie aus dem oder den thermochemischen Speichern zuführbar oder entziehbar ist, wobei die Zufuhr oder die Entziehung der thermischen Energie mittels der Steuer- und Regeleinrichtung (12) zur Einstellung einer Temperatur des Mediums (23) an der Abnahmestelle (5) variierbar ist.

18. Vorrichtung nach Anspruch 17, **dadurch gekennzeichnet, dass** der oder die thermochemischen Speicher jeweils mindestens einen Behälter umfassen und in dem oder den Behältern zumindest teilweise ein hydridbildendes Metall und/oder eine hydridbildende Metalllegierung eingebracht ist und im Bereich des hydridbildenden Metalls und/oder der hydridbildenden Legierung jeweils mindestens ein Wärmeübertrager (17,18) angeordnet ist.

19. Vorrichtung nach Anspruch 17 oder 18, **dadurch gekennzeichnet, dass** ein erster und ein zweiter thermochemische Speicher (2,3) vorgesehen ist und in den ersten und den zweiten thermochemischen Speicher (2,3) jeweils verschiedene hydridbildende Metalle und/oder hydridbildende Metalllegierungen eingebracht sind, die jeweils unterschiedliche Reaktionstemperaturen bei der Absorption von Wasserstoff entwickeln.

20. Vorrichtung nach Anspruch 19, **dadurch gekennzeichnet, dass** in einen ersten Behälter (6) des ersten thermochemischen Speichers (2) ein erstes Metall und/oder eine erste Metalllegierung (13) eingebracht ist und in einen zweiten Behälter (7) des zweiten thermochemischen Speichers (3) ein zweites Metall und/oder eine zweite Metalllegierung (14) eingebracht ist, wobei das erste Metall und/oder die erste Metalllegierung (13) sowie das zweite Metall und/oder die zweite Metalllegierung (14) unterschiedliche Desorptionstemperaturen bei einem Druck von 1 bar entwickeln.

21. Vorrichtung nach Anspruch 20, **dadurch gekennzeichnet, dass** im ersten und im zweiten Behälter (6,7) eine erste und eine zweite Wasserstoffverteilung (8,9) angeordnet ist, die mittels eines von der Steuer- und Regeleinrichtung (12) gesteuerten Wasserstoffregelventils (10) untereinander verbindbar sind.

22. Vorrichtung nach Anspruch 20 oder 21, **dadurch gekennzeichnet, dass** das Wasserstoffregelventil (10) im Bedarfsfall zur Nachfüllung oder Abführung von Wasserstoff mit einer Wasserstoffquelle verbindbar ist.

23. Vorrichtung nach einem der Ansprüche 20 bis 22, **dadurch gekennzeichnet, dass** das Medium (23) vom Mediumspeicher (4) und/oder von der Zuführung (24) über ein Regelventil (26) wahlweise zu einem ersten und/oder zu einem zweiten Wärmeübertrager (17,18) über eine erste und/oder eine zweite Zuleitung (19,21) leitbar ist.

24. Vorrichtung nach einem der Ansprüche 20 bis 23, **dadurch gekennzeichnet, dass** das Medium (23) vom ersten und/oder zweiten Wärmeübertrager (17,18) über eine erste und/oder eine zweite Rückleitung (28,33) in den Mediumspeicher (4) zurück und/oder zu einer einem Abnahmeregelventil (30) nachgeschalteten Abnahmestelle (5) leitbar ist.

25. Vorrichtung nach einem der Ansprüche 20 bis 24, **dadurch gekennzeichnet, dass** in einer Bereitschaftsphase nahezu der gesamte Wasserstoff innerhalb des zweiten thermochemischen Speichers (3) gebunden ist, bei dem die Desorptionstemperatur bei einem Druck von 1 bar im Vergleich zum ersten thermochemischen Speicher (2) geringer ist.

26. Vorrichtung nach einem der Ansprüche 20 bis 25, **dadurch gekennzeichnet, dass** in einer Nutzphase der im zweiten thermochemischen Speicher (3) in Form eines Hydrids gebundene Wasserstoff durch die zumindest teilweise Öffnung des Wasserstoffregelventils (10) und/oder die Zufuhr von Wärme in den ersten thermochemischen Speicher (2) überführbar ist.

27. Vorrichtung nach einem der Ansprüche 20 bis 26, **dadurch gekennzeichnet, dass** während der Nutzphase dem im Bereich des ersten Wärmeübertragers (17) befindlichen Medium (23) thermische Energie zuführbar und/oder dem im Bereich des zweiten Wärmeübertragers (18) befindlichen Medium (23) thermische Energie entziehbar ist, wobei die Zuführung und/oder die Entziehung der thermischen Energie mit Hilfe der Steuer- und Regeleinrichtung (12) sowie einer mit dieser gekoppelten Temperaturwähleinrichtung derart steuerbar ist, dass eine definierte Temperatur ϑ des Mediums (23) im Bereich der Abnahmestelle (5) weitgehend verzögerungsfrei erreichbar ist.

28. Vorrichtung nach einem der Ansprüche 20 bis 27, **dadurch gekennzeichnet, dass** eine Regenerationsphase durch die zumindest teilweise Öffnung des Wasserstoffregelventils (10) einleitbar ist, wobei der Wasserstoff vom ersten thermochemischen Speicher (2) in den zweiten thermochemischen Speicher (3) zurückführbar ist.

29. Vorrichtung nach einem der Ansprüche 20 bis 28, **dadurch gekennzeichnet, dass** die thermochemischen Speicher (2,3) jeweils über eine von der Steuer- und Regeleinrichtung (12) steuerbare erste und zweite Speichertemperiereinrichtung (15,16) verfügen, um die Desorptionsrate des Wasserstoffs im betreffenden thermochemischen Speicher (2,3) direkt durch die Temperatur des jeweiligen Metalls und/oder der Metalllegierung (13,14) zu beeinflussen und damit die Rückführung des Wasserstoffs in den zweiten thermochemischen Speicher (3) in der Regenerationsphase zu ermöglichen.

30. Vorrichtung nach einem der Ansprüche 20 bis 29, **dadurch gekennzeichnet, dass** im Bereich der ersten und/oder der zweiten Zuleitung (19,21) zu den thermochemischen Speichern (2,3) jeweils eine erste und/oder eine zweite Zuleitungstemperiereinrichtung (20,22) angeordnet ist, um die Desorptionsrate des Wasserstoffs im betreffenden thermochemischen Speicher (2,3) indirekt über die Temperatur des Mediums (23) im Bereich der jeweiligen Zuleitung (19,21) zum Wärmeübertrager (17,18) zu beeinflussen und die Rückführung des Wasserstoff in den zweiten thermochemischen Speicher (3) während der Regerationsphase zu ermöglichen.

31. Vorrichtung nach einem der Ansprüche 20 bis 30, **dadurch gekennzeichnet, dass** im Bereich der ersten und/oder der zweiten Rückleitung (28,33) ein Förderorgan zur Förderung des gasförmigen und/oder flüssigen Mediums, insbesondere eine Pumpe (35,36), angeordnet ist.

32. Vorrichtung nach einem der Ansprüche 20 bis 31, **dadurch gekennzeichnet, dass** das gasförmige und/oder das flüssige Medium (23) insbesondere Wasser ist.

33. Vorrichtung nach einem der Ansprüche 20 bis 32, **dadurch gekennzeichnet, dass** aus den thermochemischen Speichern (2,3) durch Desorption freigesetzter Wasserstoff einer Brennstoffzelle zur Erzeugung von Strom zuleitbar ist.

34. Verwendung einer Vorrichtung mit den Merkmalen des Patentanspruchs 17 zur Temperierung eines gasförmigen und/oder flüssigen Mediums (23) in Küchen-, Sanitär-, oder Aufenthaltsbereichen von Verkehrsmitteln, insbesondere in Luftfahrzeugen.

35. Verwendung nach Anspruch 34, **dadurch gekennzeichnet, dass** das gasförmige und/oder das flüssige Medium (23) insbesondere Wasser ist.
